# EUROPÄISCHE PATENTSCHRIFT

(11) **EP 0 821 622 B1**
(45) Veröffentlichungstag und Bekanntmachung des Hinweises auf die Patenterteilung: **09.12.1998**
(21) Anmeldenummer: 96907274.3
(22) Anmeldetag: 26.03.1996
(51) Int. Cl.: B03B 9/06

(54) **VERFAHREN UND EINRICHTUNG ZUR AUFBEREITUNG VON GEBINDEN**
METHOD AND DEVICE FOR PROCESSING METAL CONTAINERS
PROCEDE ET DISPOSITIF DE TRAITEMENT D'EMBALLAGES METALLIQUES

(30) Priorität: 06.04.1995 DE 19512550
(43) Veröffentlichungstag der Anmeldung: 04.02.1998
(73) Patentinhaber: Svedala Lindemann GmbH, 40231 Düsseldorf (DE)
(72) Erfinder: GROBLER, W., Hendrik, D-41466 Neuss (DE); ADOLPH, Manfred, D-40764 Langenfeld (DE)
(86) Internationale Anmeldenummer: DE9600519
(87) Internationale Veröffentlichungsnummer: WO9631280

(56) Entgegenhaltungen:
- EP-A- 0 270 200
- EP-A- 0 444 745
- EP-A- 0 480 508
- EP-A- 0 480 763
- DE-A- 4 325 104
- FR-A- 2 699 152
- NL-A- 9 001 596

## Beschreibung

### Technisches Gebiet

Die Erfindung betrifft ein Verfahren und eine Vorrichtung zur umweltgerechten Aufbereitung von Gebinden, wie Behälter, Fässer, Dosen mit darin befindlichen flüssigen Reststoffen und/oder anhaftenden Schichten von Reststoffen, wie Anstrichstoffe, Klebstoffe, Plastikstoffe, wobei die Gebinde auch aus nichtmetallischem Material bestehen können. Neben den flüssigen oder pastösen Reststoffen können in den Gebinden auch Wasserreste aus atmosphärischen Einflüssen vorkommen.

### Stand der Technik

Um die Wertstoffe aus diesen Gebinden zurückzugewinnen und die Reststoffe zu entsorgen, sind Verfahren bekannt, die im wesentlichen die für sich bekannten Verfahrensschritte, wie Zerkleinern der Gebinde, Unterkühlen zwecks Versprödung der Reststoffe, Separieren und Trennen der weiterverwendbaren Wertstoffe sowie Entsorgung der Reststoffe umfassen. Dafür werden Einrichtungen verwendet, die hauptsächlich aus bekannten Zerkleinerungsvorrichtungen wie Shredder, Drehrohrkühler, Trenn- und Separier- sowie Entsorgungsvorrichtungen bestehen.

Derartige Verfahren und Vorrichtungen sind in verschiedenen Variationen zur Aufbereitung von Gebinden im weiteren Sinne nach NL 7 702 333, EP 0 044 507, EP 0 119 079, DE 34 43 042, DE 39 00 482, NL 9 001 596, EP 0 480 508 und DE 43 25 104 bekannt. Verfahrenstypisch ist es, die dem Gebinde anhaftenden Reststoffe jeglicher Art einer Versprödung durch Kühlmittel, wie z.B. flüssigen Stickstoff zu unterziehen. Dadurch können die versprödeten Reststoffe leicht z.B. mittels mechanischer Einwirkung vom Gebinde gelöst werden.

In der Praxis hat sich als nachteilig herausgestellt, daß diese oben beschriebenen Verfahrensabläufe noch nicht ausreichend wirtschaftlich sind und der Verbrauch von Kühlmittel und damit Energie verhältnismäßig hoch ist. Es besteht auch das Problem, den Materialstrom kontinuierlich und zeitlich aufeinander abzustimmen, was ursächlich einer aus einzelnen Vorrichtungen zusammengesetzten Gesamtanlage zur Durchführung des gattungsgemäßen Verfahrens nicht eigen ist.

### Darstellung der Erfindung

Der Erfindung liegt daher die Aufgabe zugrunde, die o.g. gattungsgemäßen bekannten Verfahren und Vorrichtungen so zu verbessern, daß deren Leistung sowie Verfügbarkeit erhöht und der Energieverbrauch gesenkt werden.
Überraschend auf die an sich bekannten Verfahrensschritte technisch-physikalisch und wirtschaftlich einwirkend hat sich gezeigt, daß die bisherigen Nachteile dadurch behoben werden, wenn unmittelbar nach dem Aufgeben der Gebinde und vor dem Unterkühlen und Zerkleinern die Gebinde erfindungsgemäß zur Erhöhung der Wärmeleitfähigkeit verdichtet und dabei Teile von Reststoffen aus dem Gebinde ausgequetscht und abgetrennt werden. In weiterer Verfolgung dieses Erfindungsgedankens, entsprechend den Ansprüchen 2 bis 9, läßt sich das Verfahren so beeinflussen, daß vorteilhaft eine Stückgrößenoptimierung und damit die Erhöhung der Leistungsfähigkeit und Verfügbarkeit des Verfahrens und der Vorrichtung erreichbar sind.

Dabei ist das Verfahren so auslegbar, daß es vorteilhaft durch die Kombination mit einer Steuerung/Regelung des Förderstromes in Abhängigkeit von dem jeweiligen Aufbereitungsgrad der Gebindebestandteile weitgehend automatisierbar wird.

Die erfindungsgemäße Ausbildung der Vorrichtung gemäß den Ansprüchen 10 bis 20 unterstützt und verstärkt den technisch-wirtschaftlichen Effekt des Verfahrens in seinem gesamten Ablauf. Es führen die Verdichtung der aufgegebenen Gebinde mit der Erhöhung der Wärmeleitfähigkeit zur Senkung des Energieverbrauchs und zur Stückgrößenoptimierung sowie schließlich zur Erhöhung der Leistungsfähigkeit des Verfahrens. So ist es insbesondere durch die Auslegung einer Walzenpresse möglich, die verdichtete Oberflächenstruktur der Gebinde noch zu strecken, zu öffnen bzw. aufzuschließen, was den bereits beschriebenen Effekt noch verstärkt. Im folgenden Ausführungsbeispiel wird die Erfindung erläutert.

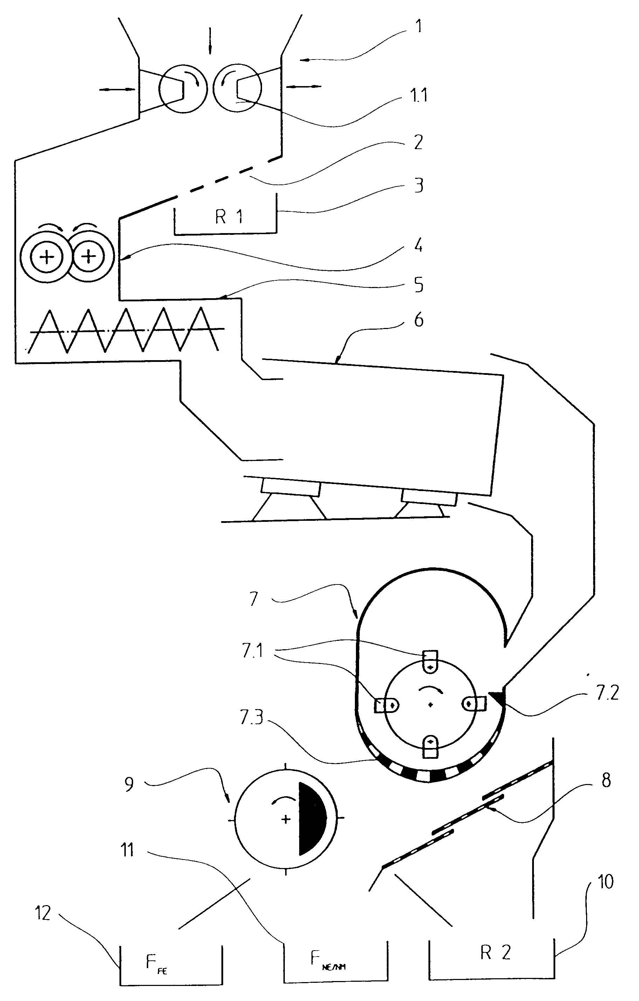

### Kurze Beschreibung der Zeichnung

Die Zeichnung zeigt in schematischer Darstellung eine erfindungsgemäße Einrichtung zur Aufbereitung von Gebinden mit der das Verfahren durchführbar ist.

### Bester Weg zur Ausführung der Erfindung

Im wesentlichen besteht die Vorrichtung aus einer unmittelbar nach der Aufgabe der Gebinde angeordneten Walzenpresse 1 mit Walzen 1.1, einem darunter angeordneten siebartigen Rost 2, einem unter dem Rost befindlichen Behälter 3, einer der Walzenpresse 1 nachgeordneten Rotorschere 4, einer Förderschnecke 5, einer Kühleinrichtung, z.B. einem Drehrohrkühler 6, mit nicht näher dargestelltem Auslaß zu einem Hammerbrecher 7 mit auf einem Rotor schwenkbeweglich angeordneten Hämmern 7.1 und einem amboßartigen Gegenwerkzeug 7.2 sowie einem unteren Rost 7.3, einem unter dem Rost 7.3 befindlichen Kaskadensieb 8 mit darunter angeordnetem Behälter 10, einem nachgeordneten Magnetscheider 9 und Behältern 11 und 12.

Die Walzenpresse 1 ist in bezug auf den Verdichtungsdruck und die Geschwindigkeit der Walzen 1.1 einstellbar. Die Walzen 1.1 können vorteilhaft mit zueinander unterschiedlichen Drehzahlen betrieben werden.

Verfahrensgemäß werden die aufzubereitenden Gebinde in Pfeilrichtung über nicht näher dargestellte Aufgabevorrichtungen den gegenläufigen Walzen 1.1 der Walzenpresse 1 zugeführt. In einem kontinuierlichen Durchlauf werden dabei die Gebinde verdichtet und Teile von Reststoffen, wie z.B. Farbreste und Wasser, ausgepreßt bzw. ausgequetscht. Dabei erfährt das Gebinde eine Verdichtung und eine Erhöhung der Wärmeleitfähigkeit. Die ausgequetschten Reststoffe R₁, flüssig oder pastös, gelangen durch den Rost 2 in den Behälter 3 und können von dort schon entsorgt werden.

Der für die Erhöhung der Wärmeleitfähigkeit maßgebliche Verdichtungsprozeß wird in seiner verfahrensbedeutsamen Wirkung noch verstärkt, wenn das verdichtete Material des Gebindes durch die zueinander mit unterschiedlichen Drehzahlen betriebenen Walzen 1.1 eine Streckung bis hin zur Öffnung der Oberflächenstruktur des platten Gebindes erfährt. Werden die Mantelflächen der Walzen 1.1 dazu noch profiliert oder gar werkzeugartig ausgebildet, ist dieser für den weiteren Verfahrensablauf bedeutsame Effekt Verdichtung/ Streckung/Materialöffnung maximal erreicht.

Das so verdichtete, gestreckte bzw. geöffnete und platte Material des Gebindes gelangt als Überlauf des Rostes 2 zur Rotorschere 4, in der durch relativ niedertouriges Schneiden die erste und Vorzerkleinerung erfolgt. Hier wirkt sich schon vorteilhaft aus, daß dem Schneidprozeß ein weitgehend plattenförmiges Aufgabegut zugeführt wird, welches eine optimale Auslegung der Rotorschere 4, insbesondere hinsichtlich ihrer Verfügbarkeit ermöglicht.

Über eine Fördereinrichtung, wie z.B. die Förderschnecke 5, gelangen die so behandelten Gebindeteile in die Kühleinrichtung, z.B. den Drehrohrkühler 6. Zweckmäßig ist es, den Boden der Förderschnecke siebrostartig auszubilden, um eventuell durch die Zerkleinerung in der Rotorschere abgetrennte Reststoffe vor der Kühleinrichtung abzuscheiden. Durch die bisher gezielte Einwirkung auf die Stückgrößenoptimierung läßt sich der Förderstrom der Gebindeteile rationell und effektiv steuern, d.h., daß hier schon eine erhöhte Leistungsfähigkeit des Verfahrens zur Wirkung kommt. Dem Drehrohrkühler 6 wird ein kontinuierlicher und relativ homogener Förderstrom von verdichteten, vorzerkleinerten Gebindeteilen zugeführt. Dadurch wird eine zeit- und energiesparende Unterkühlung, z.B. mit flüssigem Stickstoff, bis zur Versprödungstemperatur der den Gebindeteilen noch anhaftenden Reststoffe R₂ ermöglicht, da sich hier besonders der Effekt Verdichtung/Wärmeleitfähigkeit auswirkt und der Anteil der noch zu versprödenden Reststoffe R₂ durch die vorangehenden Schritte bereits verringert ist. Somit wird der Verfahrensablauf in seiner Leistungsfähigkeit, seinem verringerten Energieeinsatz und seiner Effizienz weiter ausgebaut.

Über den nicht dargestellten Auslaß wird das auf die Versprödungstemperatur der Reststoffe R₂ heruntergekühlte Material von Gebindeteilen als Aufgabegut dem Hammerbrecher 7 zugeführt. In diesem relativ hochtourigen zweiten Zerkleinerungsprozeß mittels der Hämmer 7.1 und dem Gegenwerkzeug 7.2 werden die aufgegebenen Gebindeteile endgültig von den versprödeten Reststoffen überwiegend durch die Schlagenergie getrennt.

Auch hier läßt sich der eigentliche Erfindungsgedanke vorteilhaft ausnutzen, indem sich z.B. die Auslegung und Wirkung des Hammerbrechers 7 für dieses Verfahren bestimmen läßt und damit günstige Voraussetzungen für die nachgeordnete Trennung in sortenreine Fraktionen geschaffen werden.

Die durch den Rost 7.3 gelangenden zerkleinerten Gebindeteile und abgetrennten versprödeten Reststoffe R₂ werden dann über eine Siebeinrichtung, wie z.B. ein Kaskadensieb 8, geführt. Die versprödeten Reststoffe R₂ werden als Siebunterlauf von dem zu entsorgenden Behälter 10 aufgenommen. Der Siebüberlauf wird über einen Magnetscheider 9 einer Trennung, z.B. in eine Fe-Fraktion F_{Fe} für den Behälter 12 und eine Nichteisen/Nichtmetall-Fraktion F_{NE/NM} für den Behälter 11, unterzogen. Letztere Fraktion ist durch eine hier nicht näher beschriebene und nicht dargestellte NE-Scheidung in weitere gewünschte Wertstofffraktionen aufbereitbar.

Somit wird schließlich erreicht, daß die die einzelnen Verfahrensschritte in ihrer Effektivität und technisch-physikalischen Wirkung befruchtende erfindungsgemäße Verdichtung vor dem Zerkleinern und Unterkühlen auch eine sortenreine Trennung von weiterverwendbaren Wertstoffen und zu entsorgenden Reststoffen ermöglicht.

### Gewerbliche Anwendbarkeit

Insgesamt realisiert die Erfindung ein Verfahren und eine Vorrichtung zur Aufbereitung von Gebinden, welche den Verfahrensablauf umweltfreundlich, energiesparend und mit kontinuierlichem Förderstrom gestaltet. Die sortenreinere Trennung der wiederverwertbaren Fraktionen von den zu entsorgenden Reststoffen gewährleistet einen hohen Ausbeutungsgrad an Wertstoffen.

### Bezugszeichenliste

- 1: = Walzenpresse
- 1.1: = Walzen
- 2: = siebartiger Rost
- 3: = Behälter für ausgequetschte Reststoffe
- 4: = Rotorschere
- 5: = Schneckenförderer
- 6: = Drehrohrkühler
- 7: = Hammerbrecher
- 7.1: = Hammer
- 7.2: = Gegenwerkzeug
- 7.3: = Rost
- 8: = Kaskadensieb
- 9: = Magnetscheider
- 10: = Behälter für versprödete Reststoffe
- 11: = Behälter für Nicht- u. NE-Metalle
- 12: = Behälter für Fe-Partikel
- R1: = Reststoffe, flüssig o. pastös
- R2: = Reststoffe, versprödet
- F_{Fe}: = Fe-Fraktion
- F_{NE/NM}: = Nichteisen/Nichtmetall-Fraktion

## Patentansprüche

1. Verfahren zur Aufbereitung von Gebinden, wie Behälter, Fässer, Dosen mit darin befindlichen flüssigen Reststoffen und/oder anhaftenden Schichten von z.T. pastösen Reststoffen, wie Anstrichstoffe, Klebstoffe, Plastikstoffe, umfassend folgende Verfahrensschritte und -abläufe: mindestens eine Stufe zum Unterkühlen zwecks Versprödung der Reststoffe, eine Stufe zum Zerkleinern, Separierstufen und Trennstufen einschließlich Entsorgen der Restfraktion, **dadurch gekennzeichnet**, daß unmittelbar nach dem Aufgeben der Gebinde und vor dem Unterkühlen und Zerkleinern die Gebinde zur Erhöhung der Wärmeleitfähigkeit verdichtet und dabei Teile von Reststoffen ausgequetscht und abgetrennt werden.

2. Verfahren nach Anspruch 1, **dadurch gekennzeichnet**, daß Preßdruck und Preßgeschwindigkeit in Abhängigkeit von der Stoffdichte einstellbar sind.

3. Verfahren nach Anspruch 1 oder 2, **dadurch gekennzeichnet**, daß während des Verdichtens eine Streckung, Aufschließung und/oder Öffnung der Oberflächenstruktur des Gebindes erfolgt.

4. Verfahren nach einem der Ansprüche 1 bis 3, **dadurch gekennzeichnet**, daß die Verdichtung kontinuierlich abläuft.

5. Verfahren nach einem der Ansprüche 1 bis 4, **dadurch gekennzeichnet**, daß nach dem Verdichten der aufgegebenen Gebinde mit Ausquetschung von Teilen der Reststoffe (R₁) zur Erhöhung der Wärmeleitfähigkeit des weiter zu behandelnden Gebindes als nachgeordneter Schritt das Abtrennen der ausgequetschten Reststoffe (R₁) erfolgt.

6. Verfahren nach einem der Ansprüche 1 bis 5, **gekennzeichnet durch** eine erste Zerkleinerungsstufe und Vorzerkleinerung durch Schneiden in einer Rotorschere (4) nach der Verdichtung der Gebinde.

7. Verfahren nach einem der Ansprüche 1 bis 6, **gekennzeichnet durch** eine zweite Zerkleinerungsstufe in einem Hammerbrecher (7).

8. Verfahren nach einem oder der Ansprüche 1 bis 7, **gekennzeichnet durch** einen Verfahrensschritt zum Schleuderseparieren wie mittels Fliehkraft zwecks Abtrennung von Reststoffen und/oder Fraktionen.

9. Verfahren nach einem der Ansprüche 1 bis 8, **gekennzeichnet durch** eine auf den jeweiligen Aufbereitungsgrad der Gebindebestandteile bezogene Steuerung/Regelung des Förderstromes für einen automatisierten Verfahrensablauf.

10. Vorrichtung zur Durchführung des Verfahrens nach Anspruch 1, bestehend aus für sich bekannte Zerkleinerungsvorrichtungen, einer Kühlvorrichtung, Separier- und Trennvorrichtungen, **gekennzeichnet durch** eine unmittelbar nach der Aufgabe der Gebinde angeordnete Presse (1) zur Verdichtung der aufgegebenen Gebinde, zur Erhöhung der Wärmeleitfähigkeit und zum Ausquetschen und Abtrennen von Reststoffen.

11. Vorrichtung nach Anspruch 10, **gekennzeichnet durch** die Reihenfolge der Anordnung von
a) Presse (1),
b) Rotorschere (4),
c) Kühlvorrichtung (6),
d) Hammerbrecher (7) und
e) nachgeschalteten Trenn- und/oder Separiervorrichtungen (8; 9).

12. Vorrichtung nach Anspruch 10 oder 11, **dadurch gekennzeichnet**, daß die Presse (1) eine Walzenpresse mit mindestens zwei Walzen (1.1) ist.

13. Vorrichtung nach Anspruch 10 oder 11, **dadurch gekennzeichnet**, daß die Presse (1) eine Kammerpresse ist.

14. Vorrichtung nach einem der Ansprüche 11 bis 13, **dadurch gekennzeichnet**, daß Presse (1) und Rotorschere (4) eine Baueinheit bilden.

15. Vorrichtung nach einem der Ansprüche 10 bis 14, **dadurch gekennzeichnet**, daß die Presse (1) in bezug auf den Druck und die Geschwindigkeit einstellbar ist.

16. Vorrichtung nach Anspruch 12, **dadurch gekennzeichnet**, daß die Walzen (1.1) mit zueinander unterschiedlichen Drehzahlen betrieben werden.

17. Vorrichtung nach Anspruch 11 oder 16, **dadurch gekennzeichnet**, daß die Mantelfläche der Walzen (1.1) profiliert ist.

18. Vorrichtung nach Anspruch 11 oder 16, **dadurch gekennzeichnet**, daß die Mantelfläche der Walzen (11) werkzeugartig ausgebildet ist.

19. Vorrichtung nach einem der Ansprüche 10 bis 18, **gekennzeichnet durch** die Verwendung einer Abscheidevorrichtung (9) für eine Fe-Fraktion (F_{Fe}).

20. Vorrichtung nach einem der Ansprüche 10 bis 19, **gekennzeichnet durch** die Verwendung einer Abscheidevorrichtung für NE-Metalle.

## Claims

1. A process for processing packing containers such as containers, drums, cans with any liquid residual materials and/or adhering layers of partially paste-like residual materials such as paints, adhesives, plastics, comprising the following process steps and procedures: at least one stage for undercooling for the purpose of embrittling the raw materials; a stage for size reduction; stripping and separating stages including disposal of the remaining fraction, characterised in that immediately after charging the packing containers and before undercooling and size reduction, the packing containers are compressed to increase thermal conductivity and thus parts of the residual materials are crushed out and stripped.

2. A process according to claim 1, characterised in that the pressing power and the pressing speed are adjustable depending on the material density.

3. A process according to claim 1 or 2, characterised in that expansion, breaking up and/or opening of the surface texture of the packing containers take place during compression.

4. A process according to one of claims 1 to 3, characterised in that compression takes place continuously.

5. A process according to one of claims 1 to 4, characterised in that after compression of the charged packing containers with the crushing out of parts of the residual materials (R₁) for increasing the thermal conductivity of the packing containers to be further processed, as a subsequent step, separation of the crushed out residual materials (R₁) takes place.

6. A process according to one of claims 1 to 5, characterised by a first size-reduction stage and preliminary size reduction by cutting in a rotary cutter (4) after compression of the packing containers.

7. A process according to one of claims 1 to 6, characterised by a second size-reduction stage in a hammer crusher (7).

8. A process according to one or several of claims 1 to 7, characterised by a process step for centrifugal separation, such as by means of gravity, for the purpose of stripping residual materials and/or fractions.

9. A process according to one of claims 1 to 8, characterised by a control of the feed flow, in respect of the particular degree of processing of the components of the packing containers, for an automated process.

10. A device for implementing the process according to claim 1, comprising size-reduction devices which are known per se, a cooling device, separating and stripping devices, characterised by a press (1) arranged directly behind the charge position of the packing containers, for compressing the charged packing containers to increase thermal conductivity and to crush out and strip residual materials.

11. A device according to claim 10, characterised by the sequence of arranging
a) the press (1),
b) the rotary cutter (4),
c) the cooling device (6),
d) the hammer crusher (7), and
e) the subsequent stripping devices and/or separating devices (8, 9).

12. A device according to claim 10 or 11, characterised in that the press (1) is a roll press comprising at least two rolls (1.1).

13. A device according to claim 10 or 11, characterised in that the press (1) is a chamber press.

14. A device according to one of claims 11 to 13, characterised in that the press (1) and the rotary cutter (4) form a constructional unit.

15. A device according to one of claims 10 to 14, characterised in that the press (1) is adjustable in respect of pressure and speed.

16. A device according to claim 12, characterised in that the rolls (1.1) are operated at variable speeds in relation to each other.

17. A device according to claim 11 or 16, characterised in that the roll surface of the rollers (1.1) comprises a profile.

18. A device according to claim 11 or 16, characterised in that the roll surface of the rollers (11) is of tool-like shape.

19. A device according to one of claims 10 to 18, characterised by the use of a separating device (9) for an Fe fraction (F_{Fe}).

20. A device according to one of claims 10 to 19, characterised by the use of a separating device for non-ferrous metals.

## Revendications

1. Procédé pour préparer des emballages tels que réservoirs, fûts, boîtes métalliques avec des produits résiduels liquides se trouvant à l'intérieur et/ou des couches adhérentes de produits résiduels en partie pâteux tels que peintures, matières plastiques, comprenant les étapes et séquences de procédé suivants: au moins un niveau pour le surrefroidissement destiné à la fragilisation des produits résiduels, un niveau pour le broyage, des niveaux de triage et niveaux de séparation avec l'évacuation de la fraction résiduelle, caractérisé en ce que, directement après le chargement des emballages et avant le surrefroidissement et le broyage, les emballages sont compressés pour augmenter la conductibilité thermique et des parties de produits résiduels sont alors pressées et séparées.

2. Procédé selon la revendication 1, caractérisé en ce que la pression et la vitesse de pressage sont réglables en fonction de la densité de produit.

3. Procédé selon la revendication 1 ou 2, caractérisé en ce qu'un étirement, une mise à nu et/ou une ouverture de la structure superficielle de l'emballage surviennent pendant la compression.

4. Procédé selon l'une quelconque des revendications 1 à 3, caractérisé en ce que la compression se déroule de façon continue.

5. Procédé selon l'une quelconque des revendications 1 à 4, caractérisé en ce que la séparation des produits résiduels (R₁) extraits par pressage intervient comme étape consécutive après la compression des emballages chargés avec extraction par pressage de parties des produits résiduels (R₁) pour augmenter la conductibilité thermique de l'emballage à traiter ultérieurement.

6. Procédé selon l'une quelconque des revendications 1 à 5, caractérisé par un premier niveau de broyage et un prébroyage par découpage dans un ciseau à rotor (4) après la compression des emballages.

7. Procédé selon l'une quelconque des revendications 1 à 6, caractérisé par un deuxième niveau de broyage dans un concasseur à marteaux (7).

8. Procédé selon l'une quelconque des revendications 1 à 7, caractérisé par une étape de procédé pour la séparation par centrifugation, par exemple au moyen de la force centrifuge pour la séparation des produits résiduels et/ou de fractions.

9. Procédé selon l'une quelconque des revendications 1 à 8, caractérisé par un contrôle/réglage du débit spécifique au niveau de préparation respectif des éléments constitutifs de l'emballage pour un déroulement de procédé automatisé.

10. Dispositif pour l'application du procédé selon la revendication 1, comprenant des dispositifs de broyage connus en soi, un dispositif de refroidissement, des dispositifs de triage et de séparation, caractérisé par une presse (1) disposée juste après le chargement des emballages pour la compression des emballages chargés, pour l'augmentation de la conductibilité thermique et pour l'extraction par pressage et la séparation des produits résiduels.

11. Dispositif selon la revendication 10, caractérisé par l'ordre de succession de l'agencement des éléments suivants
a) presse (1)
b) ciseau à rotor (4)
c) dispositif de refroidissemnt (6),
d) concasseur à marteaux (7) et
e) dispositif de triage et/ou de séparation (8;9) monté en aval.

12. Dispositif selon la revendication 10 ou 11, caractérisé en ce que la presse (1) est une presse à rouleaux avec au moins deux rouleaux (1,1).

13. Dispositif selon la revendication 10 ou 11, caractérisé en ce que la presse (1) est une presse à chambre.

14. Dispositif selon l'une quelconque des revendications 11 à 13, caractérisé en ce que la presse (1) et le ciseau à rotor (4) forment une unité modulaire.

15. Dispositif selon l'une quelconque des revendications 10 à 14, caractérisé en ce que la presse (1) est réglable en ce qui concerne la pression et la vitesse.

16. Dispositif selon la revendication 12, caractérisé en ce que les rouleaux (1.1) sont exploités avec des vitesses de rotation différentes entre eux.

17. Dispositif selon la revendication 11 ou 16, caractérisé en ce que la surface périphérique des rouleaux (1.1) est profilée.

18. Dispositif selon la revendication 11 ou 16, caractérisé en ce que la surface périphérique des rouleaux (11) est réalisée sous la forme d'un outil.

19. Dispositif selon l'une quelconque des revendications 10 à 18, caractérisé par l'utilisation d'un dispositif de séparation (9) pour une fraction de fer (F_{FE}).

20. Dispositif selon l'une quelconque des revendications 10 à 19, caractérisé par l'utilisation d'un dispositif de séparation pour les métaux non ferreux.
